# EUROPÄISCHE PATENTSCHRIFT

(11) **EP 2 730 817 B1**
(45) Veröffentlichungstag und Bekanntmachung des Hinweises auf die Patenterteilung: **25.11.2020**
(21) Anmeldenummer: 13186812.7
(22) Anmeldetag: 01.10.2013
(51) Int. Cl.: F16H 61/02, B60K 23/04, B60K 23/08, F16H 59/14, F16H 59/66

(54) **Verfahren und Steuergerät zur Steuerung eines Verteilergetriebes und/oder einer Differenzialsperre eines Fahrzeugs**
Method and control device for controlling a for controlling a transfer case and/or a differential lock of a vehicle
Procédé et appareil de commande pour le contrôle d'une boîte de transfert et/ou d'un blocage de différentiel d'un véhicule

(30) Priorität: 13.11.2012 DE 102012220677
(43) Veröffentlichungstag der Anmeldung: 14.05.2014
(73) Patentinhaber: ZF Friedrichshafen AG, 88046 Friedrichshafen (DE)
(72) Erfinder: Nusser, Stefan Michael, 88074 Meckenbeuren (DE); Schuster, Michael, 94157 Perlesreut (DE)
(74) Vertreter: ZF Friedrichshafen AG

(56) Entgegenhaltungen:
- EP-A2- 0 766 024
- DE-A1- 10 255 153
- DE-A1-102006 001 818
- DE-A1-102009 002 387
- DE-A1-102010 041 325

## Beschreibung

Die vorliegende Erfindung bezieht sich auf ein Verfahren und Steuergerät zur Steuerung eines Verteilergetriebes und/oder einer Differenzialsperre eines Fahrzeugs gemäß dem Oberbegriff der unabhängigen Ansprüche 1 und 7, entsprechend dem Dokument DE 102 55 153 A1.

In modernen Fahrzeugen wird die Steuerung des Getriebes zunehmend komplexer, um den Fahrkomfort für Insassen des Fahrzeugs möglichst optimal zu gestalten. Besonders kann in Situationen, in denen die bisherigen Fahrzeugen verwendeten Sensorsignale nur unzureichende Informationen zur Verfügung stellen, um das Getriebe optimal einzustellen, auch nur eine ungenügende Ansteuerung von einzelnen unterstützenden Getriebeelementen, wie beispielsweise einer Differenzialsperre erfolgen. Einen ersten Ansatz für eine Verbesserung einer Getriebesteuerung kann ein einschlägiger Fachmann in diesem Zusammenhang der Schrift EP 1 338 459 B1 entnehmen.

Die DE 102 55 153 A1 offenbart ein Vierradantriebs-Steuersystem, welches einen Antriebskraftverteilungsmechanismus zum Übertragen einer Antriebskraft von einer Leistungsquelle auf Hauptantriebsräder eines Fahrzeugs umfasst, wobei der Antriebskraftverteilungsmechanismus in der Lage ist, die Antriebskraft auf Zusatzantriebsräder des Fahrzeugs zu verteilen. Das Steuersystem umfasst weiterhin einen Drehzahldifferenzdetektor zum Ermitteln einer Drehzahldifferenz zwischen den Haupt- und Zusatzantriebsrädern, und ein Antriebskraftverteilungs-Steuergerät zum Steuern einer Verteilung der Antriebskraft auf die Haupt- und Zusatzantriebsräder auf der Basis der Drehzahldifferenz, wobei das Antriebskraftverteilungs-Steuergerät eine Antriebskraft bestimmt, die auf die Zusatzräder zu übertragen ist, auf der Basis eines Ausgangs der Leistungsquelle, einer Längslastverteilung beim Fahrzeug und der Drehzahldifferenz.

Die DE 10 2006 001 818 A1 beschreibt ein Verfahren zur Fahrerunterstützung beim Fahrbetrieb eines Nutzfahrzeugs, bei dem wenigstens eine der Fahrbetriebskomponenten Fahrzeuggeschwindigkeit, Beschleunigung, Bremsen, Getriebesteuerung und -schaltung des Nutzfahrzeugs, in Abhängigkeit von der jeweiligen Fahrsituation und dem Streckenverlauf eingestellt werden und die auf dem Streckenverlauf vorausliegende Topographie einer Fahrtroute, für welche aus einem Speicher Topographiedaten abgerufen werden, bei der Einstellung der jeweiligen Fahrbetriebskomponenten rechnergestützt ausgewertet wird.

Aus der EP 0 766 024 A2 ist eine Gangwechselsteuerung für Automatikgetriebe in Kraftfahrzeugen mit einem elektronischen Steuergerät bekannt, das die Gangwechsel in Abhängigkeit von Betriebsparametern des Fahrzeugs bestimmt. Das elektronische Steuergerät steuert die Gangwechsel auch in Abhängigkeit von Eingangssignalen, die von außerhalb des Fahrzeugs gebildeten Informationen erhalten werden und die Umgebungsbedingungen des Fahrzeugs wiedergeben.

Vor diesem Hintergrund schafft die vorliegende Erfindung ein verbessertes Verfahren und ein verbessertes Steuergerät zur Steuerung eines Getriebeelementes eines Fahrzeugs gemäß den unabhängigen Ansprüchen 1 und 7. Vorteilhafte Ausgestaltungen ergeben sich aus den Unteransprüchen und der nachfolgenden Beschreibung.

Der hier vorgestellte Ansatz schafft ein Verfahren zur Steuerung eines Verteilergetriebes und/oder einer Differenzialsperre eines Fahrzeugs, dadurch gekennzeichnet, dass das Verfahren die folgenden Schritte aufweist:
Einlesen eines Drehmomentsignals und eines Neigungssignals, wobei das Drehmomentsignal ein von einem Motor abgegebenes Drehmoment und das Neigungssignal eine Neigung eines Geländes repräsentiert, auf dem sich das Fahrzeug aktuell befindet; und

Aktivieren des Verteilergetriebes und/oder der Differenzialsperre in dem Fahrzeug ansprechend auf das Drehmomentsignal und das Neigungssignal.

Unter einem Verteilergetriebe und/oder einer Differenzialsperrekann ein einzelnes (oder mehrere) Elemente eines komplexen Fahrzeuggetriebes verstanden werden. Beispielsweise kann unter einem Verteilergetriebe oder einer Differenzialsperre ein Getriebeelement verstanden werden, welches dazu ausgebildet ist, um eine Kraft von dem Motor auf Antriebselemente wie beispielsweise Räder des Fahrzeugs zu übertragen. Unter einem Verteilergetriebe kann beispielsweise ein Zusatzgetriebe verstanden werden, welches in bestimmten Situationen ein zusätzliches Drehmoment oder eine zusätzliche Kraft auf entsprechende Antriebselemente des Fahrzeugs übertragen kann. Das Drehmomentsignal kann dabei ein Drehmoment repräsentieren, welches an einer Abtriebswelle des Motors zur Verfügung steht. Unter einer Neigung des Geländes, auf dem sich das Fahrzeug aktuell befindet, kann eine Steigung oder ein Gefälle oder auch eine seitliche Neigung verstanden werden. Unter einem Aktivieren des Verteilergetriebes und/oder der Differenzialsperre kann ein Einschalten oder Zuschalten des Verteilergetriebes und/oder der Differenzialsperreverstanden werden. Ferner kann unter einem Aktivieren des Verteilergetriebes und/oder der Differenzialsperre auch ein Verändern eines Grades einer Kraftübertragung vom Motor auf das oder die Antriebselement(e) verstanden werden.

Der hier vorgestellte Ansatz basiert auf der Erkenntnis, dass eine für den Komfort des Fahrzeuginsassen wesentlich bessere Steuerung des Verteilergetriebes und/oder der Differenzialsperre möglich wird, wenn nicht nur die Neigung des Geländes, auf dem das Fahrzeug aktuell sich gerade befindet, sondern auch ein Drehmoment berücksichtigt wird, dass von dem Motor des Fahrzeugs aktuell abgegeben wird. Zugleich kann auch eine (konstante) Bewegung des Fahrzeugs in steilem Gelände sichergestellt werden. Hierdurch kann gewährleistet werden, dass bei plötzlichen Lastwechseln an den Antriebselementen des Fahrzeugs wie beispielsweise den Rädern, ein schnelles Zuschalten oder Wegschalten des Verteilergetriebes und/oder der Differenzialsperre, gefolgt von ruckartigen Bewegungen des Fahrzeugs vermieden werden kann. Vielmehr wird das Verteilergetriebe und/oder die Differenzialsperre zur Erhöhung einer Kraft- oder Drehmomentübertragung vom Motor auf ein oder mehrere Antriebselemente des Fahrzeugs dann aktiviert, wenn sich einerseits das Fahrzeug aktuell auf einer Position im Gelände mit einer vorbestimmten Neigung befindet und andererseits ein vorbestimmtes Drehmoment am Motor zur Verfügung steht.

Der hier vorgestellte Ansatz bietet den Vorteil, durch die Berücksichtigung von zumeist am Motor oder Steuergerät bereits zur Verfügung stehenden Signalen eine in Bezug auf den Fahrkomfort für Insassen des Fahrzeugs wesentlich bessere Steuerung des Getriebes oder zumindest eines Verteilergetriebes und/oder einer Differenzialsperre zu erreichen. Hierzu können im Wesentlichen bereits zur Verfügung stehende Signale miteinander verknüpft und zur Steuerung oder Aktivierung des Verteilergetriebes und/oder der Differenzialsperre verwendet werden. Hierdurch wird eine kostengünstige Möglichkeit zur Erhöhung des Fahrkomforts für Insassen des Fahrzeugs eröffnet, wobei die technischen Änderungen in der Getriebesteuerung bis auf eine neue Verknüpfung und Auswertung von bereits verfügbaren Signalen gering gehalten werden können.

Gemäß einer Ausführungsform der vorliegenden Erfindung kann im Schritt des Aktivierens das Verteilergetriebe und/oder die Differenzialsperre dann aktiviert werden, wenn das Drehmomentsignal einen Wert repräsentiert, der größer als ein erster Drehmomentschwellwert ist und das Neigungssignal einen Wert repräsentiert, der größer als ein erster Neigungssignalschwellwert ist. Eine solche Ausführungsform der vorliegenden Erfindung bietet den Vorteil, dass sichergestellt ist, dass das Verteilergetriebe und/oder die Differenzialsperre lediglich dann aktiviert wird, wenn ein hinreichend hohes Drehmoment am Motor zur Verfügung steht und das Fahrzeug zugleich an einer Position steht, die einen Mindestneigungsgrad aufweist. Somit ist sichergestellt, dass die Aktivierung des Verteilergetriebes und/oder der Differenzialsperre nur in Situationen erfolgt, in denen das Verteilergetriebe und/oder die Differenzialsperre auch tatsächlich für eine Optimierung des Fahrkomforts des Insassen benötigt wird.

Gemäß einer weiteren Ausführungsform der vorliegenden Erfindung kann im Schritt des Aktivierens das Verteilergetriebe und/oder die Differenzialsperre dann aktiviert werden, wenn das Neigungssignal einen Wert aufweist, der in einem ersten Neigungsbereich liegt und das Drehmomentsignal einen Wert aufweist, der größer oder gleich einem ersten Drehmomentgrenzwert ist. Eine derartige Ausführungsform der vorliegenden Erfindung bietet den Vorteil, dass die Berücksichtigung eines Bereichs oder Intervalls, in dem ein Wert des Neigungssignals liegt, eine deutliche Vereinfachung einer Signalauswertung der zu verarbeitenden Signale bzw. der Steuerung des Verteilergetriebes und/oder der Differenzialsperre zulässt.

Günstig ist ferner eine Ausführungsform der vorliegenden Erfindung, bei der im Schritt des Aktivierens das Verteilergetriebe und/oder die Differenzialsperre dann aktiviert wird, wenn das Neigungssignal einen Wert aufweist, der in einem zweiten Neigungsbereich liegt und das Drehmomentsignal einen Wert aufweist, der größer oder gleich einem zweiten Drehmomentgrenzwert ist, wobei der erste Neigungsbereich Werte aufweist, die kleiner als Werte aus dem zweiten Neigungsbereich sind und der zweite Drehmomentgrenzwert kleiner als der erste Drehmomentgrenzwert ist. Eine solche Ausführungsform der vorliegenden Erfindung bietet den Vorteil, dass durch die Berücksichtigung eines abgestuften Zusammenhangs zwischen dem Drehmoment und der Neigung des Geländes, auf der sich das Fahrzeug aktuell gerade befindet, eine technisch sehr einfach umzusetzende Berücksichtigung des vom Motor abgegebenen Drehmoments und der aktuellen Neigung des Geländes, auf der sich das Fahrzeug aktuell befindet, möglich ist. Zugleich kann hierdurch jedoch noch in ausreichendem Maße ein hoher Fahrkomfort für den Insassen des Fahrzeugs sichergestellt werden.

Da meist ab einer bestimmten Maximalneigung des Geländes, auf der sich das Fahrzeug aktuell befindet und/oder einem bestimmten vom Motor abgegebenen Maximaldrehmoment eine Aktivierung des Verteilergetriebes und/oder der Differenzialsperre besonders günstig erscheint, kann auch gemäß einer weiteren Ausführungsform der vorliegenden Erfindung im Schritt des Aktivierens das Verteilergetriebe und/oder die Differenzialsperre dann aktiviert werden, wenn das Neigungssignal einen Wert repräsentiert, der größer als ein Maximalneigungswert ist und/oder wenn das Drehmomentsignal einen Wert repräsentiert, der größer als ein Maximaldrehmoment ist.

Besonders vorteilhaft kann der hier vorgestellte Ansatz dann verwendet werden, wenn das Verteilergetriebe und/oder die Differenzialsperre zum Hauptfahrzeuggetriebe zusätzlich aktiviert wird. In diesem Fall kann die Hauptantriebskraft mittels des Hauptfahrzeuggetriebes übertragen werden und lediglich in der besonderen Situation, in der sich das Fahrzeug aktuell befindet, eine zusätzliche Antriebskraft über das Verteilergetriebe und/oder die Differenzialsperre auf das oder die Antriebselement(e) des Fahrzeugs übertragen werden.

Um sicherzustellen, dass kein zu schnelles Umschalten zwischen einer Aktivierung und einer Deaktivierung des Verteilergetriebes und/oder der Differenzialsperre erfolgt, kann gemäß einer weiteren Ausführungsform der vorliegenden Erfindung der hier vorgestellte Ansatz einen Schritt des Deaktivierens des Verteilergetriebes und/oder der Differenzialsperre aufweisen, wobei das Deaktivieren nach einer vordefinierten Mindestzeitdauer nach dem Aktivieren erfolgt.

Gemäß der vorliegenden Erfindung, wird bei dem Schritt des Einlesens ferner ein Drehzahlsignal eingelesen, das eine Drehzahl einer Abtriebswelle des Motors repräsentiert, wobei im Schritt des Aktivierens das Verteilergetriebes und/oder die Differenzialsperre nicht aktiviert wird, wenn das Drehzahlsignal einen Wert aufweist, der größer als ein vordefinierter Drehzahlmaximalwert ist. Die vorliegenden Erfindung bietet den Vorteil, dass das Aktivieren des Verteilergetriebes und/oder der Differenzialsperre dann verhindert wird, wenn die Antriebswelle des Motors eine zu hohe Drehzahl aufweist. In dieser Situation würde durch das Aktivieren des Verteilergetriebes und/oder der Differenzialsperre der Fahrkomfort für den Insassen des Fahrzeugs erheblich leiden, da ein kräftiger Ruck im Fahrzeug zu spüren wäre.

Ein Steuergerät kann ein elektrisches Gerät sein, das Sensorsignale verarbeitet und in Abhängigkeit davon Steuersignale ausgibt. Das Steuergerät kann eine oder mehrere geeignete Schnittstelle aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Computerprogrammprodukt auf einem Steuergerät ausgeführt wird.

Die Erfindung wird anhand der beigefügten Zeichnungen beispielhaft näher erläutert. Es zeigen:
- Fig. 1: ein Blockschaltbild eines Fahrzeugs mit einem als Steuergerät gemäß einem Ausführungsbeispiel der vorliegenden Erfindung;
- Fig. 2: ein Ausführungsbeispiel eines Schaltdiagramms zur Verwendung in einem Steuergerät gemäß einem Ausführungsbeispiel der vorliegenden Erfindung; und
- Fig. 3: ein Ablaufdiagramm eines Ausführungsbeispiels der vorliegenden Erfindung als Verfahren.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

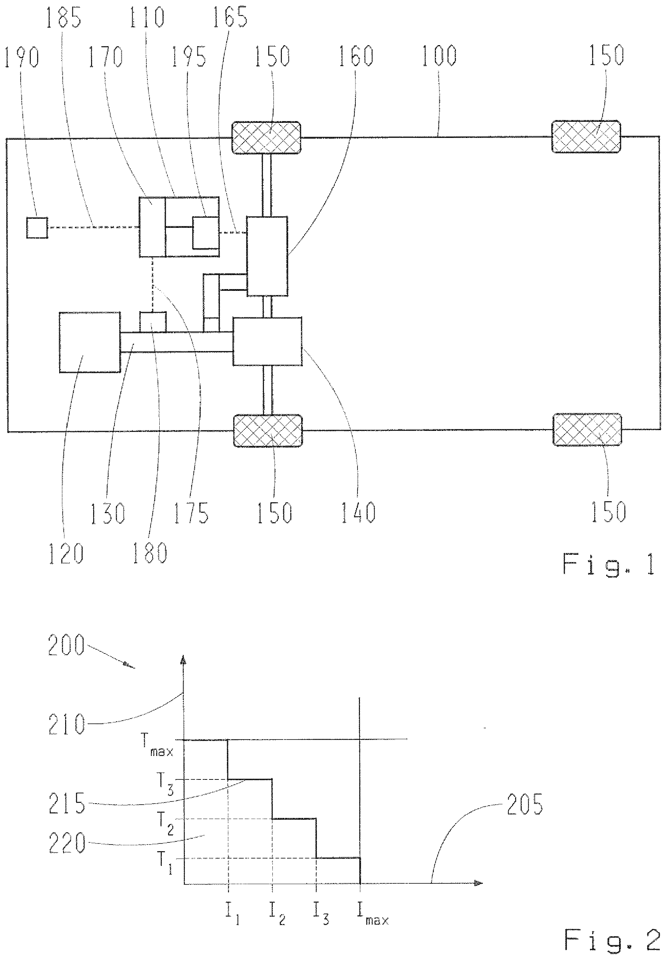

Fig. 1 zeigt ein Blockschaltbild eines Fahrzeugs 100, das ein Steuergerät 110 gemäß einem Ausführungsbeispiel der vorliegenden Erfindung aufweist. Das Fahrzeug 100, das beispielsweise Lastkraftwagen sein kann, umfasst ferner einen Motor 120 mit einer Abtriebswelle 130, die eine Kraftübertragung von dem Motor auf ein Hauptgetriebe 140 des Fahrzeugs 100 ermöglicht. Das Hauptgetriebe 140 ist dazu ausgelegt, um einen Hauptanteil einer Antriebskraft für Antriebselemente 150 bereitzustellen, wobei diese Hauptantriebselemente 150 beispielsweise Räder oder Ketten des Fahrzeugs 100 sein können. Aus Gründen einer besseren Übersichtlichkeit wurde in Fig. 1 lediglich eine Kopplung des Hauptbetriebes 140 mit zwei der vier Antriebselemente 150 dargestellt, wobei jedoch die weiteren Antriebselemente 150 des in Fig. 1 dargestellten Fahrzeugs 100 ebenfalls durch eine analoge Kopplung mit dem Hauptgetriebe 140 eine entsprechende Antriebskraft beziehen können.

Um nun eine Optimierung einer Kraftübertragung einer vom Motor 120 bereitgestellte Antriebskraft auf die Antriebselemente 150 zu ermöglichen, ist ferner ein Verteilergetriebes und/oder eine Differenzialsperre 160 vorgesehen, welches eine Anpassung der vom Hauptgetriebe 140 auf ein oder mehrere Antriebselemente 150 übertragenen Antriebskraft ermöglicht. Das in Fig. 1 dargestellte Verteilergetriebes und/oder die dargestellte Differenzialsperre 160 ist hierbei lediglich zur Anpassung der auf ein Antriebselement 150 wirkenden Antriebskraft vorgesehen, die jedoch kann durch eine andere Anordnung oder Kraftkopplung auch eine Anpassung einer Antriebskraft für mehr als ein Antriebselement 150 vorgesehen sein. Das Verteilergetriebe und/oder die Differenzialsperre 160 kann hierfür mit der Abtriebswelle 130 des Motors 120 gekoppelt sein, um neben der vom Hauptgetriebe 140 bereitgestellten Antriebskraft für das entsprechende Antriebselement 150 auch eine zusätzliche Antriebskraft (als Antriebskrafterhöhung für das Antriebselement 150) vom Motor 120 bereitstellen zu können.

Das Getriebeelement 160 ist gemäß der vorliegenden Erfindung ein Verteilergetriebe und/oder eine Differenzialsperre , das auf ein bestimmtes Signal 165 des Steuergeräts 110 aktiviert wird. Unter einem Aktivieren kann hierbei ein Zuschalten oder eine Veränderung eines Grads einer Kraftübertragung durch das Verteilergetriebes und/oder die Differenzialsperre 160 verstanden werden. Damit nun die durch den hier vorgestellten Ansatz möglichen vorteilhaften Wirkungen des gezielten Aktivierens des Verteilergetriebes und/oder der Differenzialsperre 160 erreicht werden können, kann das Steuergerät 110 eine Einleseschnittstelle 170 aufweisen. Mittels dieser Einleseschnittstelle der 170 kann ein Drehmomentsignal 175 eingelesen werden, welches von einem an der Abtriebswelle 130 befestigten Drehmomentsensor 180 bereitgestellt wird. Ferner kann von der Einleseschnittstelle 170 ein Neigungssignal 185 eingelesen werden, welches von einem Neigungssensor 190 bereitgestellt wird. Der Neigungssensor 190 kann dabei ausgebildet sein, um eine geneigte Ausrichtung des Fahrzeugs in Bezug auf eine Horizontale festzustellen, beispielsweise wenn das Fahrzeug 100 sich in einem Geländeabschnitt befindet, der ein Gefälle, eine Steigung oder eine Neigung bzw. einen Winkel oder eine Drehung um eine Längsachse des Fahrzeugs 100 aufweist. Durch die Berücksichtigung der Information aus dem Drehmomentsignal 170 sowie die Information aus dem Neigungssignal 180 kann nun eine in dem Steuergerät 110 vorgesehene Einheit 195 zum Aktivieren des Verteilergetriebes und/oder der Differenzialsperre 160 mittels des Aktivierungssignals 165 dieses Getriebeelement 160 gemäß einer nachfolgend näher beschriebenen Vorgehensweise aktivieren.

Eine Zuschaltung des Verteilergetriebes und/oder der Differenzialsperre 160, insbesondere in der Form eines Verteilergetriebes, kann nun wie vorstehend dargelegt, in Abhängigkeit von einem ermittelten Drehmoment und beispielsweise einer Steigung/Neigung erfolgen. In der Fig. 2 ist ein Ausführungsbeispiel für ein Schaltdiagramm 200 wiedergegeben, welches beispielsweise in der Einheit 195 zum Aktivieren verwendet werden kann und das beschreibt, in welchen Abhängigkeiten das Verteilergetriebe und/oder die Differenzialsperre160 zugeschaltet oder aktiviert wird. In dem in Fig. 2 dargestellten Schaltdiagramm 200 ist auf der Abszisse 205 eine Neigung des Geländeabschnitts, auf dem das Fahrzeug 100 sich aktuell befindet (beispielsweise in Prozent) angegeben, wogegen auf der Ordinate 210 des in Fig. 2 dargestellten Schaltdiagramms 200 ein aktuell an der Abtriebswelle 130 des Motors 120 abgegebenes Drehmoment (beispielsweise in Newtonmeter) angegeben ist. Eine treppenförmige Trennlinie 215 kennzeichnet einen ersten Bereich 220, der Kombinationen von Werten des Neigungssignals 185 und Werten des Drehmomentsignals 175 wiedergibt, bei denen das Getriebeelement 160 nicht aktiviert wird. Insbesondere wird dabei das Verteilergetriebe und/oder die Differenzialsperre 160 nicht aktiviert, wenn das Neigungssignal 185 einen Wert in einem ersten Neigungswertbereich aufweist, der zwischen keiner Neigung und einem ersten Neigungsgrenzwert I1 liegt und zugleich das Drehmomentsignal 170 einen Wert aufweist, der größer als ein Maximaldrehmomentgrenzwert Tmax ist. Ferner wird das Verteilergetriebe und/oder die Differenzialsperre160 auch nicht aktiviert, wenn das Neigungssignal 185 einen Wert in einem zweiten Neigungswertbereich aufweist, der zwischen dem ersten Neigungsgrenzwert I1 und einem zweiten Neigungsgrenzwert I2 liegt und zugleich das Drehmomentsignal 175 einen Wert aufweist, der kleiner als ein dritter Drehmomentgrenzwert T3 ist, der selbst kleiner als der Maximaldrehmomentgrenzwert Tmax ist. Zugleich sind die Werte des zweiten Neigungswertbereichs größer als die Werte des ersten Neigungswertbereichs. Ferner wird das Verteilergetriebe und/oder die Differenzialsperre 160 auch nicht aktiviert, wenn das Neigungssignal 185 einen Wert in einem dritten Neigungswertbereich aufweist, der zwischen dem zweiten Neigungsgrenzwert I2 und einem dritten Neigungsgrenzwert I3 liegt und zugleich das Drehmomentsignal 175 einen Wert aufweist, der kleiner als ein zweiter Drehmomentgrenzwert T2 ist, der selbst kleiner als der dritte Drehmomentgrenzwert T3 ist. Zugleich sind die Werte des dritten Neigungswertbereichs größer als die Werte des zweiten Neigungswertbereichs. Ferner wird das Verteilergetriebe und/oder die Differenzialsperre 160 auch nicht aktiviert, wenn das Neigungssignal 185 einen Wert in einem vierten Neigungswertbereich aufweist, der zwischen dem dritten Neigungsgrenzwert I3 und einem Maximalneigungswert Imax liegt und zugleich das Drehmomentsignal 175 einen Wert aufweist, der kleiner als der erste Drehmomentgrenzwert T1 ist, der selbst kleiner als der zweite Drehmomentgrenzwert T2 ist. Zugleich sind die Werte des vierten Neigungswertbereichs größer als die Werte des dritten Neigungswertbereichs.

Wird im Steuergerät 110, insbesondere in der Einheit 190 zum Aktivieren festgestellt, dass die Kombination von Werten des Drehmomentsignals 175 und des Neigungssignals 185 eine Wertekombination darstellt, die in dem in Fig. 2 dargestellten Diagramm nicht im Bereich 220 liegt, wird das Verteilergetriebe und/oder die Differenzialsperre 160 aktiviert. Insbesondere wird das Verteilergetriebe und/oder die Differenzialsperre 160 auch dann aktiviert, wenn das Drehmomentsignal 175 einen Wert aufweist, der größer als der Maximaldrehmomentgrenzwert Tmax ist und/oder das Neigungssignal 185 einen Wert aufweist, der größer als der Maximalneigungsgrenzwert Imax ist. Durch die Verwendung einer treppenförmig gestuften Trennlinie kann sichergestellt werden, dass ausreichend Antriebskraft an den Antriebselementen 150 zur Verfügung steht. Insbesondere kann bei einem sehr hohen Drehmoment an der Abtriebswelle 130 am Motor 120 das Verteilergetriebe und/oder die Differenzialsperre 160 auch bei geringen Neigungswerten zugeschaltet werden, um bei einer Laständerung an den Antriebsrädern 150 eine durch das hohe Drehmoment verursachte ruckartige Bewegung des Fahrzeugs nicht zu stark spürbar werden zu lassen. Alternativ oder zusätzlich kann es bei einem sehr geringen Drehmoment an der Abtriebswelle 130 des Motors 120 auch bei hohen Neigungswerten von Vorteil sein, wenn das Getriebeelement 10 zugeschaltet wird, da die zusätzliche vom Getriebeelement gelieferte Kraft für eine sichere Bewegung des Fahrzeugs 100 im stark geneigten Gelände erforderlich ist.

Der in dem Schaltdiagramm 200 aus Fig. 2 dargestellte funktionale Zusammenhang lässt sich nun über unterschiedliche Parameter einstellen, sodass für jeden der unterschiedlichen Fahrzeugtypen, für die das in Fig. 1 dargestellte Steuergerät 110 eingesetzt werden soll, entsprechend eingestellt werden kann. Beispielsweise kann für ein Ausführungsbeispiel eine Parametrierung verwendet werden, bei der der Maximaldrehmomentgrenzwert Tmax = 13.000 Newtonmeter beträgt, der dritte Drehmomentgrenzwert T3 = 10.000 Nm beträgt, der zweite Drehmomentgrenzwert T2 = 7000 Newtonmeter beträgt und der erste Drehmomentgrenzwert T1 = 4000 Newtonmeter beträgt. Als erster Neigungsgrenzwert kann dabei ein Steigungswert von I1 = 10 Prozent, ein zweiter Neigungsgrenzwert ein Steigungswert von I2 = 20 Prozent, ein dritter Neigungsgrenzwert ein Steigungswert von I3 = 25 Prozent und Maximalneigungsgrenzwert von Imax = 35 Prozent verwendet werden.

Auf diese Weise können somit abhängig vom Fahrzeugzustand (d. h. einem Zug- oder Schubzustand) unterschiedliche Schaltparameter verwendet werden. Die Zuschaltung einer VG-Differenzialsperre ist somit aufgrund von diversen Umständen wie beispielsweise Schlupf, Torque, Steigung, Torque und Steigung, Übersetzung, etc. auswählbar. Das Fahrzeug sollte sich bei einer Aktivierung beispielsweise eines Verteilergetriebes und/oder einer Differenzialsperre160 innerhalb von bestimmten Grenzen (Geschwindigkeit, Drehzahlunterschiede, Lenkwinkel, Versorgungsspannung, etc. befinden, bevor eine Zuschaltung des Verteilergetriebes und/oder der Differenzialsperre erfolgen kann. Weiterhin kann eine Zuschaltung einer Differenzialsperre aufgrund eines speziellen Umstandes wie beispielsweise Schlupf, Torque und Steigung etc. und der für diesen Umstand hinterlegten Grenzen erfolgen. Diese Grenzen sind beispielsweise entsprechend der Darstellung des Schaltdiagramms aus der Fig. 2 parametrierbar. Die Aktivierung des Ausgangs zur Zuschaltung einer Sperre, beispielsweise mittels der Ausgang des Aktivierungssignals 165, kann z. B. mittels eines durch ein Luftventil gesteuerten Luftdruckpuls und/oder für eine vorbestimmte Zeitdauer erfolgen. Nach einer Deaktivierung des Ausgangs des Steuergerätes (die beispielsweise durch ein Entfallen oder Verschwinden des Aktivierungssignals erfolgen kann) kann sich dann der aktivierte Zustand des Getriebeelements solange mechanisch selbst halten, bis über das Getriebeelement ein Moment von 0 Nm übertragen wird. Hierdurch kann sich beispielsweise eine Klauenkupplung durch eine Federkraft wieder lösen und das Getriebeelement in einen deaktivierten Zustand zurückgesetzt werden. Ferner kann auch durch den hier vorgestellten Ansatz eine Zuschaltung des Getriebeelementes bei einer zu hohen Drehzahl der Abtriebswelle bzw. einer Welle des Getriebeelementes verhindert oder zugelassen werden. Dies geschieht in Abhängigkeit von einem Drehmoment und einer Information über eine Steigung/Neigung des Geländeabschnitts, auf dem sich das Fahrzeug aktuell gerade befindet.

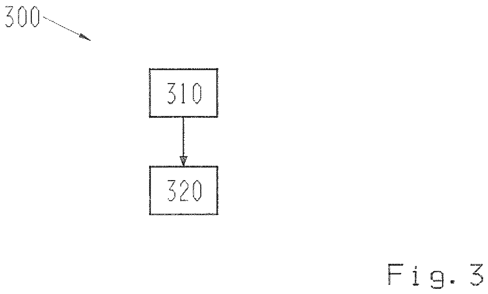

Fig. 3 zeigt ein Ablaufdiagramm eines Ausführungsbeispiels der vorliegenden Erfindung als Verfahren 300 zur Steuerung eines Getriebeelementes eines Fahrzeugs. Das Verfahren 300 weist einen Schritt des Einlesens 310 eines Drehmomentsignals und eines Neigungssignals, wobei das Drehmomentsignal ein von einem Motor abgegebenes Drehmoment und das Neigungssignal eine Neigung eines Geländes repräsentiert, auf dem sich das Fahrzeug aktuell befindet. Weiterhin umfasst das Verfahren 300 einen Schritt des Aktivierens 320 des Getriebeelementes in dem Fahrzeug ansprechend auf das Drehmomentsignal und das Neigungssignal.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Fahrzeug
- 110: Steuergerät
- 120: Motor
- 130: Abtriebswelle
- 140: Hauptgetriebe
- 150: Antriebselemente, Räder
- 160: Verteilergetriebe, Differenzialsperre
- 165: Aktivierungssignal
- 170: Einleseschnittstelle
- 175: Drehmomentsignal
- 180: Drehmomentsensor
- 185: Neigungssignal
- 190: Neigungssensor
- 195: Einheit zum Aktivieren

- 200: Schaltdiagramm
- 205: Abszisse, Neigungswerte
- 210: Ordinate, Drehmomentwerte
- 215: Trennlinie
- 220: Bereich von Wertekombinationen zur Aktivierung des Verteilergetriebes und/oder der Differenzialsperre

- I1: erster Neigungsgrenzwert
- I2: zweiter Neigungsgrenzwert
- I3: dritter Neigungsgrenzwert
- Imax: Maximalneigungsgrenzwert

- T1: erster Drehmomentgrenzwert
- T2: zweiter Drehmomentgrenzwert
- T3: dritter Drehmomentgrenzwert
- Tmax: Maximaldrehmomentgrenzwert
- 300: Verfahren zum Aktivieren eines Getriebeelementes
- 310: Schritt des Einlesens
- 320: Schritt des Aktivierens

## Patentansprüche

1. Verfahren (300) zur Steuerung eines Verteilergetriebes und/oder einer Differenzialsperre (160) eines Fahrzeugs (100), **dadurch gekennzeichnet, dass** das Verfahren (300) die folgenden Schritte aufweist:
Einlesen (310) eines Drehmomentsignals (175) und eines Neigungssignals (185), wobei das Drehmomentsignal (175) ein von einem Motor (120) abgegebenes Drehmoment und das Neigungssignal (185) eine Neigung eines Geländes repräsentiert, auf dem sich das Fahrzeug (100) aktuell befindet; und
Aktivieren (320) des Verteilergetriebes und/oder der Differenzialsperre (160) in dem Fahrzeug (100) ansprechend auf das Drehmomentsignal (175) und das Neigungssignal (185)
**dadurch gekennzeichnet, dass** im Schritt des Einlesens (310) ferner ein Drehzahlsignal eingelesen wird, das eine Drehzahl einer Abtriebswelle (130) des Motors (120) repräsentiert, wobei im Schritt des Aktivierens (320) das Verteilergetriebe und/oder die Differenzialsperre (160) nicht aktiviert wird, wenn das Drehzahlsignal einen Wert aufweist, der größer als ein vordefinierter Drehzahlmaximalwert ist.

2. Verfahren (300) gemäß Anspruch 1, **dadurch gekennzeichnet, dass** im Schritt des Aktivierens (320) das Verteilergetriebe und/oder die Differenzialsperre (160) dann aktiviert wird, wenn das Drehmomentsignal (175) einen Wert repräsentiert, der größer als ein erster Drehmomentgrenzwert (T3) ist und das Neigungssignal einen Wert repräsentiert, der größer als ein erster Neigungssignalgrenzwert (I1) ist.

3. Verfahren (300) gemäß Anspruch 1, **dadurch gekennzeichnet, dass** im Schritt des Aktivierens (320) das Verteilergetriebe und/oder die Differenzialsperre (160) dann aktiviert wird, wenn das Neigungssignal (185) einen Wert aufweist, der in einem ersten Neigungsbereich (I1 - I2) liegt und das Drehmomentsignal (175) einen Wert aufweist, der größer oder gleich einem ersten Drehmomentgrenzwert (T3) ist.

4. Verfahren (300) gemäß Anspruch 3, **dadurch gekennzeichnet, dass** im Schritt des Aktivierens (320) das Verteilergetriebe und/oder die Differenzialsperre (160) dann aktiviert wird, wenn das Neigungssignal (185) einen Wert aufweist, der in einem zweiten Neigungsbereich (I2 - I3) liegt und das Drehmomentsignal (175) einen Wert aufweist, der größer oder gleich einem zweiten Drehmomentgrenzwert (T2) ist, wobei der erste Neigungsbereich (I1 - I2) Werte aufweist, die kleiner als der zweite Neigungsbereich (I2 - I3) sind und der zweite Drehmomentgrenzwert (T2) kleiner als der ersten Drehmomentgrenzwert (T3) ist.

5. Verfahren (300) gemäß Anspruch 1, **dadurch gekennzeichnet, dass** im Schritt des Aktivierens (320) das Verteilergetriebe und/oder die Differenzialsperre (160) dann aktiviert wird, wenn das Neigungssignal (185) einen Wert repräsentiert, der größer als ein Maximalneigungswert (Imax) ist und/oder wenn das Drehmomentsignal (175) einen Wert repräsentiert, der größer als ein Maximaldrehmoment (Tmax) ist.

6. Verfahren (300) gemäß einem der vorangegangenen Ansprüche, **gekennzeichnet, durch** einen Schritt des Deaktivierens des Verteilergetriebes und/oder der Differenzialsperre (160), wobei das Deaktivieren nach einer vordefinierten Mindestzeitdauer nach dem Aktivieren (320) erfolgt wird.

7. Steuergerät (110) zur Steuerung eines Verteilergetriebes und/oder einer Differenzialsperre (110) eines Fahrzeugs (100), wobei das Steuergerät (110) die folgenden Merkmale aufweist:
eine Einleseschnittstelle (170) zum Einlesen eines Drehmomentsignals (175) und eines Neigungssignals (185), wobei das Drehmomentsignal (175) ein von einem Motor (120) abgegebenes Drehmoment und das Neigungssignal (185) eine Neigung eines Geländes repräsentiert, auf dem sich das Fahrzeug (100) aktuell befindet; und
eine Einheit (195) zum Aktivieren des Verteilergetriebes und/oder der Differenzialsperre (160) in dem Fahrzeug (160) ansprechend auf das Drehmomentsignal (175) und das Neigungssignal (185),
**dadurch gekennzeichnet, dass** das Steuergerät dazu ausgebildet ist, im Schritt des Einlesens (310) ferner ein Drehzahlsignal einzulesen, das eine Drehzahl einer Abtriebswelle (130) des Motors (120) repräsentiert, wobei das Steuergerät dazu ausgebildet ist, im Schritt des Aktivierens (320) das Verteilergetriebe und/oder die Differenzialsperre (160) nicht zu aktivieren, wenn das Drehzahlsignal einen Wert aufweist, der größer als ein vordefinierter Drehzahlmaximalwert ist.

8. Computerprogramm mit Programmcode zur Durchführung der Schritte eines Verfahrens (300) gemäß einem der Ansprüche 1 bis 6, wenn das Computerprogramm auf einem Steuergerät (110) ausgeführt wird.

## Claims

1. Method (300) for controlling a transfer case and/or a differential lock (160) of a vehicle (100), **characterized in that** the method (300) has the following steps:
reading in (310) a torque signal (175) and an inclination signal (185), wherein the torque signal (175) represents a torque which is output by a motor (120), and the inclination signal (185) represents an inclination of a piece of ground on which the vehicle (100) is currently located; and
activating (320) the transfer case and/or the differential lock (160) in the vehicle (100) in response to the torque signal (175) and the inclination signal (185),
**characterized in that** in the reading in step (310) a torque signal is also read in which represents a rotational speed of an output shaft (130) of the motor (120), wherein in the activation step (320) the transfer case and/or the differential lock (160) are/is not activated if the rotational speed has a value which is higher a predefined rotational speed maximum value.

2. Method (300) according to Claim 1, **characterized in that** in the activation step (320) the transfer case and/or the differential lock (160) are/is activated when the torque signal (175) represents a value which is higher than a first torque limiting value (T3), and the inclination signal represents a value which is higher than a first inclination signal limiting value (I1).

3. Method (300) according to Claim 1, **characterized in that** in the activation step (320) the transfer case and/or the differential lock (160) are/is activated when the inclination signal (185) has a value which lies in a first inclination range (I1-I2), and the torque signal (175) has a value which is higher than or equal to a first torque limiting value (T3).

4. Method (300) according to Claim 3, **characterized in that** in the activation step (320) the transfer case and/or the differential lock (160) are/is activated when the inclination signal (185) has a value which lies in a second inclination range (I2-I3), and the torque signal (175) has a value which is higher than or equal to a second torque limiting value (T2), wherein the first inclination range (I1-I2) has values which are lower than the second inclination range (I2-I3), and the second torque limiting value (T2) is lower than the first torque limiting value (T3) .

5. Method (300) according to Claim 1, **characterized in that** in the activation step (320) the transfer case and/or the differential lock (160) are/is activated when the inclination signal (185) represents a value which is higher than a maximum inclination value (Imax) and/or if the torque signal (175) represents a value which is higher than a maximum torque (Tmax).

6. Method (300) according to one of the preceding claims, **characterized by** a step of deactivating the transfer case and/or the differential lock (160), wherein the deactivation takes place after a predefined minimum time period after the activation (320) .

7. Control unit (110) for controlling a transfer case and/or a differential lock (110) of a vehicle (100), wherein the control unit (110) has the following features:
a reading in interface (170) for reading in a torque signal (175) and an inclination signal (185), wherein the torque signal (175) represents a torque which is output by a motor (120), and the inclination signal (185) represents an inclination of a piece of ground on which the vehicle (100) is currently located; and
a unit (195) for activating the transfer case and/or the differential lock (160) in the vehicle (100) in response to the torque signal (175) and the inclination signal (185),
**characterized in that** control unit is designed also to read in, in the reading in step (310), a rotational speed signal which represents a rotational speed of an output shaft (130) of the motor (120), wherein the control unit is designed not to activate the transfer case and/or the differential lock (160) in the activation step (320) if the rotational speed has a value which is higher than a predefined rotational speed maximum value.

8. Computer program with program code for carrying the steps of a method (300) according to one of Claims 1 to 6 when the computer program is run on a control unit (110).

## Revendications

1. Procédé (300) de commande d'une boîte de transfert et/ou d'un blocage de différentiel (160) d'un véhicule (100), **caractérisé en ce que** le procédé (300) comprend les étapes suivantes :
lecture (310) d'un signal de couple (175) et d'un signal d'inclinaison (185), le signal de couple (175) représentant un couple délivré par un moteur (120) et le signal d'inclinaison (185) une inclinaison d'un terrain sur lequel se trouve actuellement le véhicule (100) ; et activation (320) de la boîte de transfert et/ou du blocage de différentiel (160) dans le véhicule (100) en réaction au signal de couple (175) et au signal d'inclinaison (185),
**caractérisé en ce qu'**un signal de vitesse de rotation est en outre lu dans l'étape de lecture (310), lequel représente une vitesse de rotation d'un arbre de sortie (130) du moteur (120), dans l'étape d'activation (320), la boîte de transfert et/ou le blocage de différentiel (160) n'étant pas activé lorsque le signal de vitesse de rotation possède une valeur qui est supérieure à une valeur maximale de vitesse de rotation prédéfinie.

2. Procédé (300) selon la revendication 1, **caractérisé en ce que** dans l'étape d'activation (320), la boîte de transfert et/ou le blocage de différentiel (160) est activé lorsque le signal de couple (175) représente une valeur qui est supérieure à une première valeur limite de couple (T3) et le signal d'inclinaison représente une valeur qui est supérieure à une première valeur limite d'inclinaison (I1).

3. Procédé (300) selon la revendication 1, **caractérisé en ce que** dans l'étape d'activation (320), la boîte de transfert et/ou le blocage de différentiel (160) est activé lorsque le signal d'inclinaison (185) possède une valeur qui se trouve dans une première plage d'inclinaison (I1 - I2) et le signal de couple (175) possède une valeur qui est égale ou supérieure à une première valeur limite de couple (T3).

4. Procédé (300) selon la revendication 3, **caractérisé en ce que** dans l'étape d'activation (320), la boîte de transfert et/ou le blocage de différentiel (160) est activé lorsque le signal d'inclinaison (185) possède une valeur qui se trouve dans une deuxième plage d'inclinaison (I2 - I3) et le signal de couple (175) possède une valeur qui est égale ou supérieure à une deuxième valeur limite de couple (T2), la première plage d'inclinaison (I1 - I2) possédant des valeurs qui sont inférieures à la deuxième plage d'inclinaison (I2 - I3) et la deuxième valeur limite de couple (T2) étant inférieure à la première valeur limite de couple (T3).

5. Procédé (300) selon la revendication 1, **caractérisé en ce que** dans l'étape d'activation (320), la boîte de transfert et/ou le blocage de différentiel (160) est activé lorsque le signal d'inclinaison (185) représente une valeur qui est supérieure à une valeur d'inclinaison maximale (Imax) et/ou lorsque le signal de couple (175) représente une valeur qui est supérieure à un couple maximal (Tmax).

6. Procédé (300) selon l'une des revendications précédentes, **caractérisé par** une étape de désactivation de la boîte de transfert et/ou du blocage de différentiel (160), la désactivation étant effectuée après une durée minimale prédéfinie suivant l'activation (320).

7. Contrôleur (110) destiné à commander une boîte de transfert et/ou un blocage de différentiel (160) d'un véhicule (100), le contrôleur (110) possédant les caractéristiques suivantes :
une interface de lecture (170) servant à la lecture d'un signal de couple (175) et d'un signal d'inclinaison (185), le signal de couple (175) représentant un couple délivré par un moteur (120) et le signal d'inclinaison (185) une inclinaison d'un terrain sur lequel se trouve actuellement le véhicule (100) ; et
une unité (195) servant à l'activation de la boîte de transfert et/ou du blocage de différentiel (160) dans le véhicule (100) en réaction au signal de couple (175) et au signal d'inclinaison (185),
**caractérisé en ce que** le contrôleur est configuré pour lire en plus un signal de vitesse de rotation dans l'étape de lecture (310), lequel représente une vitesse de rotation d'un arbre de sortie (130) du moteur (120), le contrôleur étant configuré pour, dans l'étape d'activation (320), ne pas activer la boîte de transfert et/ou le blocage de différentiel (160) lorsque le signal de vitesse de rotation possède une valeur qui est supérieure à une valeur maximale de vitesse de rotation prédéfinie.

8. Programme informatique comprenant un code de programme destiné à exécuter les étapes d'un procédé (300) selon l'une des revendications 1 à 6 lorsque le programme informatique est exécuté sur un contrôleur (110).
